# EUROPEAN PATENT APPLICATION

(11) **EP 1 779 982 A2**
(43) Date of publication of application: **02.05.2007**
(21) Application number: 06022164.5
(22) Date of filing: 23.10.2006
(51) Int. Cl.: B25J 19/00

(54) **Stop device for robot**

(30) Priority: 26.10.2005 JP 2005311547
(71) Applicant: FANUC LTD, Minamitsuru-gun, Yamanashi 401-0597 (JP)
(72) Inventor: Kinoshita, Satoshi, Minamitsuru-gun, Yamanashi 401-0511 (JP); Takikawa, Ryuji, Yamanashi 403-0015 (JP)
(74) Representative: Thum, Bernhard

(57) **Abstract**

A stop device for a robot (1A) for stopping the relative motion of a pair of mutually movable parts (2,3), having a stopper member (8,9,10) provided at at least one of the pair of mutually movable parts (2,3), the stopper member (8,9,10) being sandwiched between the pair of mutually movable parts (2,3) when the pair of mutually movable parts (2,3) collide with the stopper member (8,9,10), wherein the stopper member (8,9,10) is a combination member composed of at least two members (8a,8b,9a,9b,10a,10b) of different hardness adhered to each other, such that opposite end faces of one member of highest hardness of at least two members (2,3), are adapted respectively to come into direct contact with the pair of mutually movable parts (2,3) and to receive a compression load exerted between the pair of mutually movable parts (2,3) at a time of collision in a generally perpendicular direction to the end faces.

## Description

### RELATED APPLICATION

The present application is based on, and claims priority from, Japanese Application Number 2005-311547, filed October 26, 2005, the disclosure of which is hereby incorporated, by reference, in its entirety.

### BACKGROUND OF THE INVENTION

### 1. Field of the Invention

The present invention relates to a stop device for a robot provided on at least one of a pair of mutually movable parts, moved relatively to each other, having a stopper to be sandwiched between the mutually movable parts to stop the relative motion when the mutually movable parts collide with each other.

### 2. Description of the Related Art

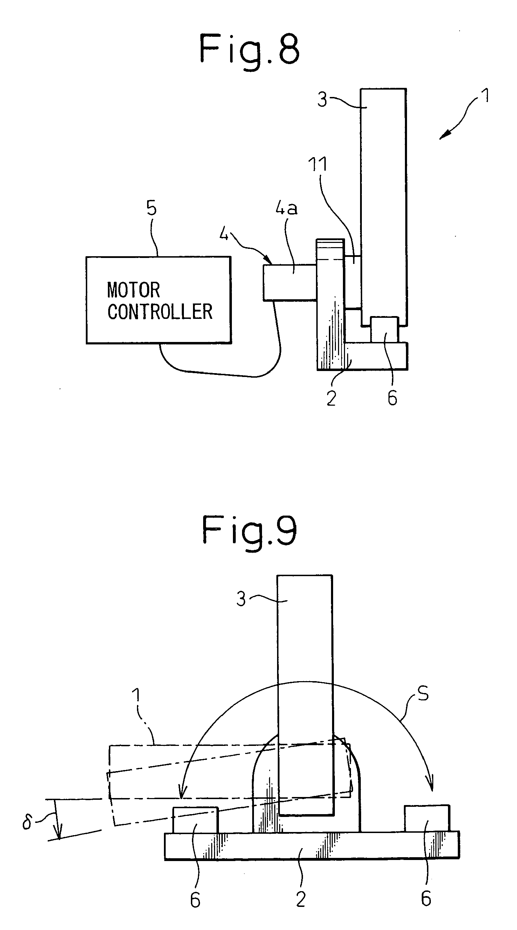

An example of stop device for a robot for stopping relative motion of a pair of mutually movable parts is shown in Fig. 8. The relative motion of a movable part is stopped relative to a fixed part. In Fig. 8, one of a pair of mutually movable parts is a base 2 as a fixed part, and the other of the pair of mutually movable parts is a robot arm 3 as a movable part, with the robot arm 3 rotatably mounted on the base 2.

The stop device 1 for robot includes a servo motor 4 as a driving source for driving the robot arm 3, a motor controller 5 for controlling the speed and position of the servo motor 4, and a stopper member 6 provided on both sides of the base 2 so as to be abutted to the robot arm 3 in rotational motion to reduce the shock at the time of collision and to stop the rotational motion. The robot arm 3 is interconnected via a speed reduction gear to the rotation axis of the servo motor 3, and is adapted to be rotated to the left or to the right about this rotation axis as the center of rotation.

The stopper member 6 defines the movable range S (operating stroke) of the robot arm 3 by being abutted to it and stopped it (Fig. 9). An ordinary industrial robot is controlled to be restricted by software such that the robot arm 3 does not go beyond the specified operating range S. However, when the robot arm 3 goes beyond the operating range S, the stopper member 6 collapses to absorb kinetic energy and the robot arm 3 is forced to stop.

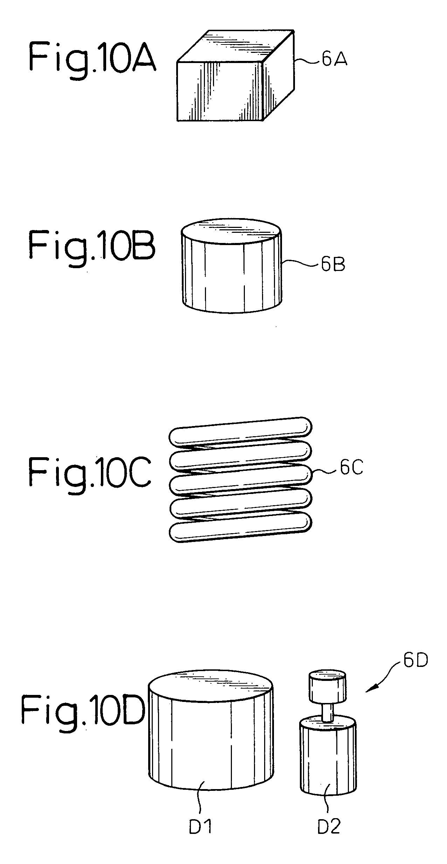

The stopper member 6 is composed generally of rubber or a spring, a damper, or a combination thereof. Figs. 10A to 10D show examples of a conventional stopper member, wherein Fig. 10A shows a square rubber stopper 6A, Fig. 10B shows a circular pillar rubber stopper 6B, Fig. 10C shows a coil spring stopper 6C, and Fig. 10D shows a combination stopper 6D consisting of a rubber stopper D1 and a damper D2.

When the robot arm 3 collides with the stopper member 6, a detection value from an unshown sensor for detecting the magnitude of shock is inputted to the motor controller 5, and the motor controller 5 stops the servo motor 4 based on this detection value.

The stopper member 6A to 6D that has been used in prior art is easily deformed (is soft) and produces little repulsion immediately after compression due to collision. As compression proceeds, the repulsive force gradually increases, and when the repulsive force of the stopper member 6 overcomes the advancing force (pushing pressure) of the robot arm 3, the robot arm 3 is stopped. Thus, in the early stage when the stopper member 6 begins to be deformed, the stopper member contributes little to stop the movement of the robot arm 3. Therefore, there is a problem that a delay is produced in the timing to stop the servo motor and the operating stroke goes beyond the limit by an amount δ, so that the stopping distance becomes longer. In the case where the kinetic energy of the robot arm 3 is large, the robot arm 3 may be damaged and this may give rise to secondary damage. It is therefore necessary to increase the size of the stopper member 6 in order to adequately receive the force.

However, as the performance of a servo motor has become increasingly higher (for higher power output) and the speed of a robot arm 3 has become higher, the kinetic energy that must be absorbed by a stopper member 6 has become correspondingly larger. Thus, in order to stop the robot arm 3 at a specified position, there is an inherent limit in the upsizing of the stopper member 6. There is a problem that the upsizing also entails reducing of the operating range S of the robot arm 3 which should be kept as wide as possible. There is another problem that the shape of the robot arm 3 is deformed and become unbalanced due to the large stopper member.

### SUMMARY OF THE INVENTION

In view of the above-described problem, it is an object of the present invention to provide a stop device for robot that is capable of stopping the motion of mutually movable parts of a robot in a short distance without increasing the size of a stopper member even if the mutually movable parts are moved at a higher speed due to an improved performance of a servo motor.

To accomplish the above objects, the present invention provides a stop device for a robot and for stopping the relative motion of a pair of mutually movable parts, comprising a stopper member provided at at least one of the pair of mutually movable parts, the stopper member being sandwiched between the pair of mutually movable parts when the pair of mutually movable parts collide with the stopper member, wherein the stopper member is a combination member composed of at least two members of different hardness adhered to each other, such that opposite end faces of one member of highest hardness of at least two members, are adapted respectively to come into direct contact with the pair of mutually movable parts and to receive a compression load exerted between the pair of mutually movable parts at a time of collision in a generally perpendicular direction to the end faces.

According to this invention, the stopper member is a combination member composed of at least two members of different hardness adhered to each other and combined such that opposite end faces of the member of highest hardness are adapted respectively to come into direct contact with the pair of mutually movable parts and to receive the compression load exerted between the pair of mutually movable parts at the time of collision in generally perpendicular direction to the opposite end faces, so that, when the stopper member is sandwiched between the pair of mutually movable parts due to the collision of the pair of mutually movable parts, the member of highest hardness receives the compression load F and produces high repulsive force. If the member of higher hardness deforms due to buckling, the repulsive force of the member of highest hardness is decreased. But, as the pair of mutually movable parts approach to each other, deformation of the member of lowest hardness due to compression proceeds, and repulsive force of the member of lowest hardness as the elastic restoring force is increased to stop the relative motion of the pair of mutually movable parts. Thus, stopping distance of the mutually movable parts of the robot can be shortened by the complementary effect of the member of highest hardness and the member of lowest hardness constituting the stopper member without increasing the size of the stopper member sandwiched between the pair of mutually movable parts.

A stop device for a robot may further include a servo motor for driving at least one of the mutually movable parts; and a motor controller for controlling the servo motor; wherein the motor controller comprises shock detecting portion for detecting magnitude of shock produced when the pair of mutually movable parts collide with the stopper member, wherein the motor controller stops the servo motor based on the detection value detected by the shock detecting portion.

According to this invention, the motor controller for controlling the servo motor comprises shock detecting means for detecting magnitude of shock produced when the pair of mutually movable parts collides with the stopper member and the magnitude of shock produced in the initial stage of the collision can be detected in early stage. Therefore, it is possible that the motor controller can perform the process for stopping the servo motor at an early stage. In this manner, delay in the timing of stopping the servo motor can be prevented, and the mutually movable parts can be stopped in a short distance.

In the above stop device for a robot, the shock detecting portion may comprise an external disturbance estimation observer.

In the above stop device for a robot, the stopper member may be composed of a soft material that is rubber or a resin, and a hard material that is a metal.

### BRIEF DESCRIPTION OF THE DRAWINGS

These and other objects and features of the present invention will become clearer from the following description of the preferred embodiments given with reference to the attached drawings, wherein:
Fig. 1 is a front view showing a stop device for robot according to an embodiment of the present invention;
Fig. 2 is a perspective view showing a first embodiment of the stopper member used in the stop device for robot according to the present invention;
Fig. 3A is a sectional view showing the stopper member as shown in Fig. 1, before compression;
Fig. 3B is a sectional view showing the stopper member as shown in Fig. 1, after compression;
Fig. 4 is a perspective view showing a second embodiment of the stopper member used in the stop device for a robot according to the present invention;
Fig. 5A is a sectional view showing the stopper member as shown in Fig. 6, before compression;
Fig. 5B is a sectional view showing the stopper member as shown in Fig. 6, after compression;
Fig. 6 is a perspective view showing a third embodiment of the stopper member used in the stop device for robot according to the present invention;
Fig. 7A is a sectional view showing the stopper member as shown in Fig. 3, before compression;
Fig. 7B is a sectional view showing the stopper member as shown in Fig. 3, after compression;
Fig. 8 is a front view showing an example of conventional stop device for a robot;
Fig. 9 is a side view of the stop device for a robot shown in Fig. 8;
Fig. 10A is perspective views showing an example of stopper member that can be applied to the stop device for robot shown in Fig. 8;
Fig. 10B is perspective views showing an example of stopper member that can be applied to the stop device for a robot shown in Fig. 8;
Fig. 10C is perspective views showing an example of stopper member that can be applied to the stop device for a robot shown in Fig. 8; and
Fig. 10D is perspective views showing an example of stopper member that can be applied to the stop device for a robot shown in Fig. 8.

### DETAILED DESCRIPTION

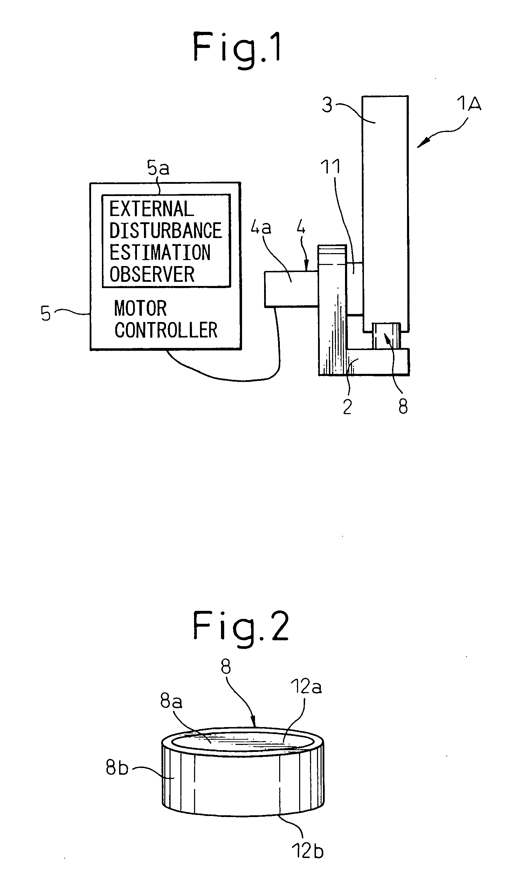

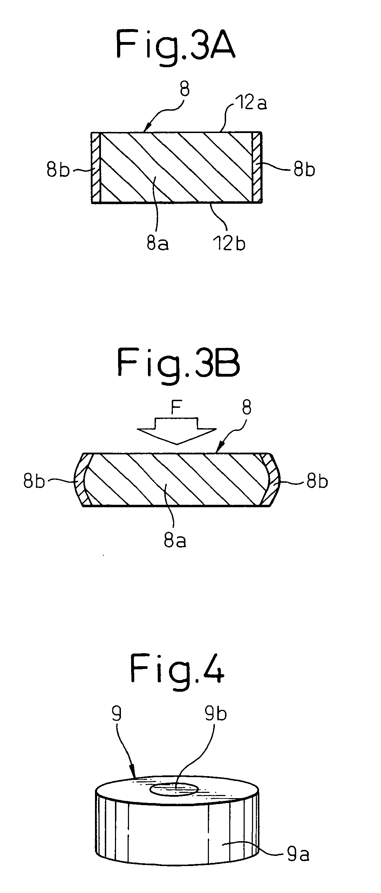

The present invention will be described in detail below with reference to appended drawings showing preferred embodiments of the stop device for a robot and the stopper member used in the device. Fig. 1 is a front view showing a stop device for a robot according to an embodiment of the present invention, and Figs. 2, 3A and 3B are views showing a first embodiment of the stopper member used for the stop device for a robot as shown in Fig. 1. Constituents common to a conventional stop device for robot as shown in Fig. 8 are denoted by same reference numerals or symbols.

A stop device 1A for a robot of the present invention stops the motion of a robot arm 3 by collision with a counterpart member when the robot arm 3 moves beyond a predetermined operating range, and involves a base 2, a robot arm 3 rotatably mounted to the base 2, a servo motor 4 as a driving source for driving the robot arm 3, a motor controller 5 for controlling the speed and position of the servo motor 4, and a stopper member 8 provided on both sides of the base 2 for abutting against the robot arm 3 in rotational motion to reduce the shock at the time of collision and to stop the rotational motion.

The base 2 as one of the mutually movable parts is fixed to an unshown pivotable robot's body and supports the robot arm 3 rotatably via a joint portion. Thus, the base 2 and the robot arm 3 can be moved relative to each other.

The rod-shaped robot arm 3 as the other of the mutually movable parts is attached at the basal end via a joint portion to the base 2 and at the distal end via an unshown joint portion rotatably to another robot arm. Thus, the robot arm 3 can be rotated to the left or to the right about the rotation axis on the base side, as shown in Fig. 9.

The servo motor 4 includes a motor body 4a and an unshown encoder as a position detector for detecting position information of the motor 4a. Its rotation axis is interconnected via a speed reduction gear 11 to the robot arm 3. The servo motor 4a provides speed reduction gear 11 such as a gear transmission mechanism so as to output higher torque.

The motor controller 5 includes an unshown motor controlling section electrically interconnected via the servo amplifier to the servo motor, and an external disturbance estimation observer 5a.

The servo amplifier is composed of a CPU (Central Processing Unit), a memory, I/F, or the like, and controls the servo motor 4 on the basis of a command of the motor controlling section. For example, when the servo motor 4 is controlled to be stopped, the speed command is set to "0", and a command calculated by feedback processing leads to torque command (current command) for driving the servo motor 4 in reverse direction, so that the speed of the servo motor 4 is reduced by the specified braking torque until the servo motor 4 is finally stopped.

In the motor controlling section, a command from a CPU is transmitted via the shared memory to the digital servo circuit. Conversely, signal such as error signal from the digital servo circuit is transmitted via the shared memory to the controller. Thus, bidirectional signal transmission and reception is possible via the memory shared between the CPU and the digital servo circuit.

The external disturbance estimation observer 5a detects collision of the robot arm 3 driven by the servo motor 4 with the base 2 from the torque command by observer. Foe example, the observer 5a regards the torque variation of the servo motor 4 as an external disturbance torque and thereby detects collision of the robot arm 3 driven by the servo motor 4 with the base 2. When the observer 5a detects collision, the observer 5a outputs an alarm signal and changes the speed command to "0" to produce the stopping torque for the servo motor 4.

The stopper member 8 is provided on both sides of the base 2 (only one side is shown in Fig. 1) as a member to be collided to the robot arm 3 for stopping the relative motion of the robot arm 3 when the robot arm 3 moves beyond the specified operating range (defined stroke) due to a malfunction or the like.

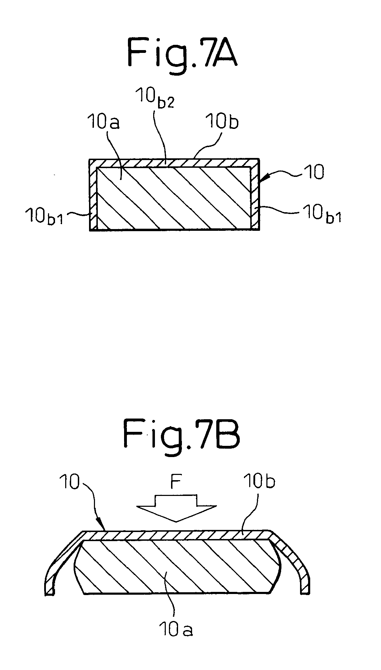

As shown in Fig. 2, the stopper member 8 of the first embodiment is a cylindrical soft material 8a of rubber surrounded and covered by hard material 8b of a metal. The stopper member 8, as seen from the direction of compression load F, includes the hard material 8b such that the hard material is disposed on the front surface (one end face) 12a and on the rear surface (the other end face) so as to form a bridge therebetween. In other words, the soft material 8a and the hard material 8b are combined such that opposite end faces 12a, 12b of the individual members 8a, 8b come into direct contact with the base 2 and the robot arm 3, respectively, and receive the compression load at the time of collision of the robot arm 3 generally in perpendicular direction to opposite end faces 12a, 12b. The soft material 8a and the hard material 8b are joined to each other such that the two surfaces do not separate at the boundary surface when subjected to the compression load F. The soft material 8a and the hard material 8b may separate at the boundary surface of two members after being subjected to the compression load (see Fig. 7).

As shown in Fig. 3B, when compression load F acts on the stopper member 8, the hard material 8b exhibits a strong repulsion initially. However, as the compression load F increases, the hard material 8b gradually deforms in buckling, and the entire stopper member 8 is deformed into barrel-shape. The hard material 8b exhibits maximum repulsion when it begins to deform from initial non-deformed state. With increase of deformation, the repulsive force against the compression load F becomes smaller. On the other hand, the soft material 8a, for which there is proportional relation between the load and the deformation, exhibits only small repulsion immediately after beginning of the compression, but as the compression increases with deformation, the repulsive force against the compression load F becomes increasingly larger.

Thus, the hard material 8b exhibits a large repulsive force immediately after the compression starts, whereas the soft material 8a exhibits a gradually increasing repulsive force after the compression load F acts on it. By combining these members 8a, 8b to compose the stopper member 8, the stopper member 8 can maintain high repulsive force at any time, so that the stopping distance of the robot arm 3 can be made small when the robot arm 3 collides with the base 2. In particular, since high repulsive force is produced immediately after the compression starts, the external disturbance estimation observer 5a can detect the collision in early timing, and the servo motor 4 can be stopped immediately after the compression starts.

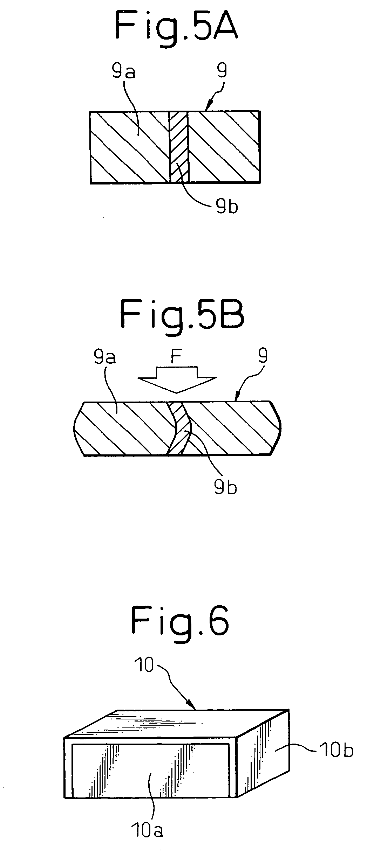

Figs. 4, 5A and 5B are views showing the stopper member 9 according to a second embodiment. The stopper member 9 of the present embodiment differs from the stopper member 8 of the first embodiment in that the hard material 9b is disposed in the center of the stopper member 9 and the soft material 9a is disposed in the outer periphery of the stopper member 9. Otherwise, the constituents are same as in the first embodiment, and therefore, duplicate explanation thereof is omitted.

In accordance with the present embodiment, the stopper member 9 has the hard material 9b disposed in the center of the stopper member 9 and, therefore, the area of the end face of the hard material 9b subjected to compression is smaller than that of the hard material 8b of the first embodiment, and the hard material 9b is more likely to produce buckling when subjected to the compression load F and collapse immediately after the compression starts. Thus, shock at the time of collision can be more effectively reduced, and the robot arm 3 can be stopped smoothly.

Figs. 6, 7A and 7B are views showing the stopper member 10 according to a third embodiment. The stopper member 10 of the present embodiment is in the shape of rectangular parallelepiped and differs from the stopper member 8 of the first embodiment in that the hard material 10b is formed so as to cover a pair of opposing side surfaces and top surface of the soft material 10a. The hard material 10b is formed in the shape of gate, and is composed of a pair of legs 10b₁, 10b₁, and a plate 10b₂ between the pair of legs 10b₁, 10b₁.

As shown in Fig. 7B, once the stopper member 10 is subjected to compression load, the hard material 8b bulges outward and separates from the boundary surface of the soft material 8a. Thus, the soft material 8a mainly receives the compression load.

The stopper member 10 of the present embodiment has the colliding surface completely covered with the hard material. This acts effectively when the counterpart surface is not plane. Otherwise, constituents are same as in the first embodiment and, therefore, a duplicate explanation thereof is omitted.

As has been described above, as the stop device for robot 1A provides a stopper member 8 to 10 having two members of different hardness combined, it can develop high repulsive force immediately after the compression starts upon collision, and can start stop control at an early stage of the collision. In addition, complementary effect of the hard material 8b, 9b, 10b and the soft material 8a, 9a, 10a helps to maintain high repulsive force from the collision to the stop, and the stopping distance of the robot arm 3 can be thereby shortened. The size of the stopper member need not be increased and a small-sized stop device can be provided.

The present invention is not limited to above-described embodiments, but can be implemented in many variations and modifications without departing from the concept of the invention. For example, the stopper member can be composed of three or more members of incrementally different hardness. Also, in place of the external disturbance estimation observer 5a, a sensor such as a piezoelectric device may be used as a detecting portion. The stopper member can be used as a stopper for a machining center, a turning center, etc.

## Claims

1. A stop device for robot (1A) and for stopping the relative motion of a pair of mutually movable parts (2, 3), comprising a stopper member (8, 9, 10) provided at at least one of a pair of mutually movable parts, the stopper member (8, 9, 10) being sandwiched between the pair of mutually movable parts (2, 3) when the pair of mutually movable parts (2, 3) collide with the stopper member (8, 9, 10),
**characterized in that** the stopper member (8, 9, 10) is a combination member composed of at least two members (8a, 8b, 9a, 9b, 10a, 10b) of different hardness adhered to each other, such that opposite end faces of a member (8b, 9b, 10b) of highest hardness of at least two members (8a, 8b, 9a, 9b, 10a, 10b), are adapted respectively to come into direct contact with the pair of mutually movable parts (2, 3) and to receive the compression load exerted between the pair of mutually movable parts (2, 3) at a time of collision in a generally perpendicular direction to the end faces.

2. A stop device for robot (1A) as claimed in claim 1, comprising:
a servo motor (4) for driving at least one of the mutually movable parts (2, 3); and
a motor controller (5) for controlling the servo motor (4);
wherein the motor controller (5) comprises shock detecting portion (5a) for detecting magnitude of shock produced when the pair of mutually movable parts (2, 3) collide with the stopper member (8, 9, 10),
wherein the motor controller (5) stops the servo motor (4) based on the detection value detected by the shock detecting portion (5a).

3. A stop device for robot (1A) as claimed in claim 2,
wherein the shock detecting portion (5a) comprises an external disturbance estimation observer.

4. A stop device for robot (1A) as claimed in claim 1,
wherein the stopper member (8, 9, 10) is composed of a soft material (8a, 9a, 10a) that is rubber or a resin, and a hard material (8b, 9b, 10b) that is a metal.
